# EUROPÄISCHE PATENTSCHRIFT

(11) **EP 0 784 170 B1**
(45) Veröffentlichungstag und Bekanntmachung des Hinweises auf die Patenterteilung: **28.06.2000**
(21) Anmeldenummer: 96120702.4
(22) Anmeldetag: 21.12.1996
(51) Int. Cl.: F16H 61/02

(54) **Verfahren zur Steuerung des Hochschaltvorganges eines Kraftfahrzeug-Automatikgetriebes**
Upshift control method of automatic vehicle transmission
Méthode de commande du changement de vitesse en haut de transmission automatique de véhicule

(30) Priorität: 12.01.1996 DE 19600914
(43) Veröffentlichungstag der Anmeldung: 16.07.1997
(73) Patentinhaber: ADAM OPEL AG, 65423 Rüsselsheim (DE)
(72) Erfinder: Becker, Gernot, Dipl.-Ing. (FH), 55278 Dexheim (DE); Kleila, Hans, Dipl.-Ing. (FH), 65428 Rüsselsheim (DE)
(74) Vertreter: Kümpfel, Heinz, Dipl.-Ing.

(56) Entgegenhaltungen:
- EP-A- 0 559 263
- US-A- 4 312 249
- US-A- 4 845 621
- US-A- 5 241 476

## Beschreibung

Die Erfindung betrifft ein Verfahren zur Steuerung des Hochschaltvorganges eines Kraftfahrzeug-Automatikgetriebes mit elektronischem Getriebesteuergerät gemäß dem Oberbegriff des Patentanspruches 1.

Auf US-A 5 241 476, das als nächstliegender Stand der Technik angesehen wird, ist ein Verfahren zum angepaßten Festlegen eines Hochschaltvorganges von einem dritten zu einem vierten Gang eines automatischen Getriebes beschrieben, wobei die im Oberbegriff des Patentanspruches 1 beschriebenen Mittel verwendet werden. Nachteilig ist bei diesem Verfahren jedoch, daß ein Hochschalten immer nur dann zugelassen wird, wenn nach dem Schaltvorgang ein Geschwindigkeitszuwachs, d. h. eine positive Beschleunigung zu erwarten ist. Das mit einem solchen Verfahren arbeitende Kraftfahrzeug wird somit auch dann mit dem niedrigeren Gang und entsprechend hoher Motordrehzahl betrieben, wenn bei gleicher Fahrgeschwindigkeit oder einer geringfügig geringeren Fahrgeschwindigkeit auch die Vortriebekraft des höheren Ganges ausreichend wäre.

Ein weiteres Verfahren zur Steuerung des Gangwechsels eines Kraftfahrzeug-Automatikgetriebes der genannten Art, welches mit einer Antriebsschlupf-Regelung zusammenarbeitet, ist in DE 41 11 644 A1 beschrieben. Bei diesem bekannten Verfahren werden Hochschaltungen während des Regeleingriffes des Antischlupf-Regelsystems unabhängig von den normalen Schaltkennlinien für eine bestimmte Fahrzeuggeschwindigkeit unterhalb einer für jeden Gang spezifischen unteren Hochschaltgeschwindigkeit des Fahrzeuges unterbunden oder verzögert, indem die Hochschaltkennlinien während des Regeleingriffes um einen bestimmten Wert über den Normalwert angehoben werden. Damit können während des Regeleingriffes des Antriebsschlupf-Regelsystems unerwünschte Pendelschwingungen vermieden werden. Nach dieser Druckschrift ist es auch bekannt, eine Hochschaltung nach einer Hochschaltanforderung entsprechend einer Schaltkennlinie während des Regeleingriffes des Antischlupf-Regelsystems nur dann auszuführen, wenn sich die Fahrzeuggeschwindigkeit gegenüber der beim Regeleingriff vorliegenden Geschwindigkeit um einen definierten Mindestbetrag erhöht hat. Auch dadurch können die unerwünschten Pendelschaltungen während des Regeleingriffes des Antischlupf-Regelsystems unterbunden werden.

Im normalen Fahrbetrieb, bei dem das Antischlupf-Regelsystem nicht eingreift, kann jedoch ein nach diesem bekannten Verfahren gesteuertes Automatikgetriebe bei bestimmten Fahrzuständen, z. B. bei Bergfahrt, trotzdem zu Pendelschaltungen mit den nachteiligen Auswirkungen neigen.

Es ist Aufgabe der Erfindung, diese Pendelschaltungen bei jedem Fahrzustand auf einfache Weise zu vermeiden.

Erfindungsgemäß wird diese Aufgabe durch die Merkmale des Anspruches 1 gelöst, dem nach wird die definierte Mindestbeschlennigung als eine der Fahrgeschwindigkeit zugeordnete Größe im Steuergerät abgelegt.

Mit dieser erfindungsgemäßen Ausgestaltung werden Pendelschaltungen auch unter extremen Fahrzuständen, wie beispielsweise Bergauffahrt mit Anhängelast, sicher vermieden.

Zur Prüfung der definierten möglichen Mindestbeschleunigung wird der momentane Fahrwiderstand des Fahrzeuges aus den Werten von Drosselklappenöffnungswinkel, Motordrehzahl, Motordrehmoment, Fahrzeuggeschwindigkeit, Getriebeübersetzung und Wandlerverstärkungsgrad errechnet und verglichen mit der im höheren Gang möglichen Vortriebskraft.

Dabei kann die Berechnung des momentanen Fahrwiderstandes im Getriebesteuergerät ständig erfolgen und bei Vorliegen einer Hochschaltanforderung zur Prüfung der möglichen definierten positiven Mindestbeschleunigung im nächsthöheren Gang mit der dort möglichen Vortriebskraft verglichen werden.

Die Berechnung des momentanen Fahrwiderstandes kann jedoch auch jeweils bei Vorliegen einer Hochschaltanforderung durch diese ausgelöst werden, um dann zur Prüfung der möglichen definierten positiven Mindestbeschleunigung im höheren Gang zu dienen.

Ausführungsbeispiele der Erfindung sind nachstehend anhand von Flußdiagrammen näher beschrieben.

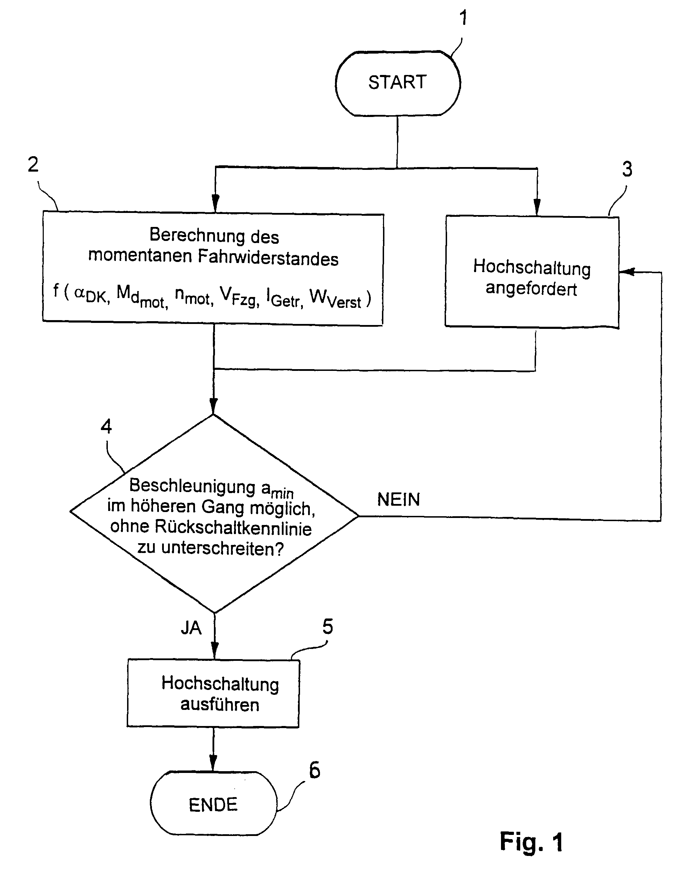

Die Figur 1 zeigt das Flußdiagramm eines Verfahrens, bei dem nach dem Start 1 eine Aktivität 2 zur Berechnung des momentanen Fahrwiderstandes als Funktion des Drosselklappenöffnungswinkels α_{DK}, des Motordrehmomentes M_{dₘₒₜ}, der Motordrehzahl nₘₒₜ, der Fahrgeschwindigkeit des Fahrzeuges V_{Fzg}, der momentanen Getriebeübersetzung I_{Getr} sowie der Momentenverstärkung W_{Verst} durch den Drehmomentenwandler ständig ermittelt wird.

Sobald durch Überschreiten einer im Steuergerät abgelegten Hochschaltkennlinie des Getriebes mit einer Aktivität 3 eine Hochschaltung angefordert ist, wird im Steuergerät eine Entscheidung 4 getroffen, ob bei dem gegenwärtig vorliegenden Fahrwiderstand nach dem Hochschalten in den nächsthöheren Gang eine für die aktuelle Geschwindigkeit definierte positive Beschleunigung aₘᵢₙ erzielbar bleibt. Ist die Entscheidung 4 positiv, wird ein Schaltbefehl generiert und mit Aktivität 5 die angeforderte Hochschaltung ausgeführt. Der Steuervorgang ist dann bei 6 abgeschlossen.

Wird jedoch bei der Entscheidung 4 erkannt, daß die definierte minimale Beschleunigung aₘᵢₙ im nächsthöheren Gang nicht erreichbar sein wird, dann wird die Aktivität 5 zum Hochschalten solange unterdrückt bis die gesetzte Bedingung eintritt.

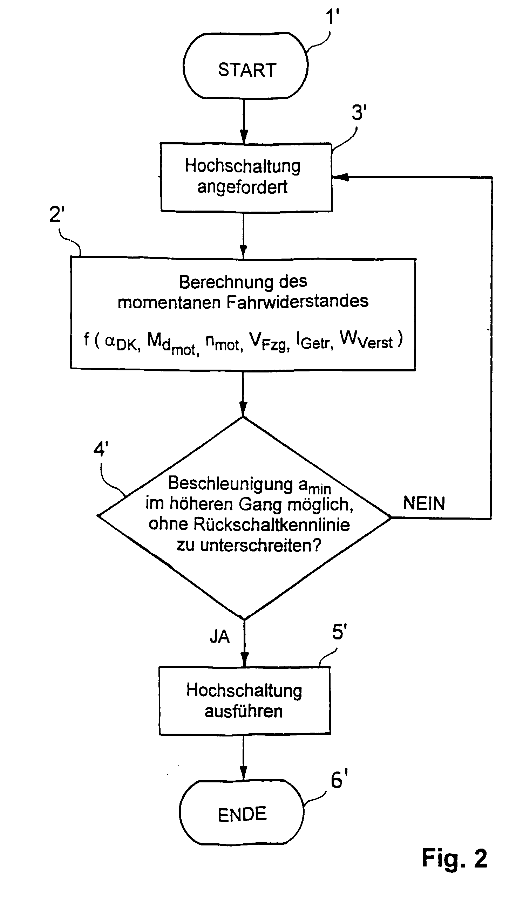

Figur 2 ist das Flußdiagramm eines abgewandelten Verfahrens. Nach Start 1' wird immer erst dann eine Aktivität 2' zur Berechnung des momentanen Fahrwiderstandes ausgelöst, wenn über eine Aktivität 3' eine Hochschaltung durch Überschreiten einer Hochschaltkennlinie angefordert wird. Aufgrund des ermittelten aktuellen Fahrwiderstandes nach Aktivität 2' wird durch eine Entscheidung 4 festgestellt, ob nach dem Hochschalten in den nächsthöheren Gang eine für die aktuelle Geschwindigkeit definierte positive Beschleunigung aₘᵢₙ erzielbar bleibt. Wird die Entscheidung 4' bejaht, dann wird durch die Aktivität 5' die Hochschaltung ausgeführt; wird sie verneint, dann wird die Aktivität 5' zum Ausführen des Hochschaltens solange unterdrückt bis die gesetzte Bedingung eintritt.

Die nach dem Hochschalten erreichbare Minimal-Beschleunigung aₘᵢₙ ist dabei, definiert für jede aktuelle Fahrgeschwindigkeit, als Tabelle im Steuergerät abgelegt und für jede Entscheidung 4, 4' abrufbar.

Da für die Entscheidung 4, 4' als Basisvergleichswert der momentane Fahrwiderstand zugrundeliegt, werden alle Belastungsgrößen des Antriebs bei der Hochschaltentscheidung berücksichtigt. Dazu gehören z. B. auch die Belastung durch Anhänger, durch ansteigende Fahrbahn oder durch weiche Fahrbahn mit hohem Abrollwiderstand. Ein Hochschalten erfolgt immer nur dann, wenn im nächsthöheren Gang mit der definierten positiven Beschleunigung aₘᵢₙ weitergefahren werden kann; Pendelschaltungen werden so sicher unterbunden.

## Patentansprüche

1. Verfahren zur Steuerung des Hochschaltvorganges eines Kraftfahrzeug-Automatikgetriebes mit elektronischem Getriebesteuergerät, das in Abhängigkeit von Drosselklappenöffnungswinkel und Fahrzeuggeschwindigkeit sowie vermittels abgespeicherter Hochschaltkennlinien bzw. Rückschaltkennlinien ein Hochschalten bzw. Rückschalten steuert, wobei nach Überschreiten einer Hochschaltkennlinie durch den aktuellen Betriebspunkt vom Getriebesteuergerät vor dem Auslösen eines Hochschaltvorganges geprüft wird, ob nach dem aus aktuellen Werten von Drosselklappenöffnungswinkel (α_{DK}), Motordrehzahl (nₘₒₜ), Motordrehmoment (M_{dₘₒₜ}), Fahrzeuggeschwindigkeit (V_{Fzg}), Getriebeübersetzung (I_{Getr}) und Wandlerverstärkungsgrad (W_{Verst}) errechneten momentanen Fahrwiderstand (Aktivität 2, 2') eine definierte Mindestbeschleunigung (aₘᵢₙ) im höheren Gang möglich ist, ohne die Rückschaltkennlinie zu unterschreiten (Entscheidung 4, 4'), bei negativem Prüfergebnis der Hochschaltvorgang unterdrückt wird und bei positivem Prüfergebnis die Hochschaltung (Aktivität 5, 5') ausgeführt wird, **dadurch gekennzeichnet**, daß die definierte Mindestbeschleunigung (aₘᵢₙ) als eine der Fahrgeschwindigkeit (V_{Fzg}) zugeordnete Größe im Steuergerät abgelegt ist.

2. Verfahren nach Anspruch 1, **dadurch gekennzeichnet**, daß zur Prüfung der definierten möglichen Mindestbeschleunigung (aₘᵢₙ) der errechnete momentane Fahrwiderstand des Fahrzeuges aus den aktuellen Werten von Drosselklappenöffnungwinkel (α_{DK}), Motordrehzahl (nₘₒₜ), Motordrehmoment (M_{dₘₒₜ}), Fahrzeuggeschwindigkeit (V_{Fzg}), Getriebeübersetzung (I_{Getr}) und Wandlerverstärkungsgrad (W_{Verst}) errechnet (Aktivität 2, 2') und mit der im nächsthöheren Gang möglichen Vortriebskraft verglichen (Entscheidung 4, 4') wird.

3. Verfahren nach Anspruch 1 oder 2, **dadurch gekennzeichnet**, daß die Berechnung des momentanen Fahrwiderstandes (Aktivität 2) im Getriebesteuergerät ständig erfolgt und bei Vorliegen einer Hochschaltanforderung (Aktivität 3) zur Prüfung der möglichen definierten positiven Mindestbeschleunigung (aₘᵢₙ) im nächsthöheren Gang mit der dort möglichen Vortriebskraft verglichen wird (Entscheidung 4).

4. Verfahren nach Anspruch 1 oder 2, **dadurch gekennzeichnet**, daß die Berechnung des momentanen Fahrwiderstandes (Aktivität 2') im Getriebesteuergerät jeweils bei Vorliegen einer Hochschaltanforderung (Aktivität 3') durch diese ausgelöst wird, um dann als Grundlage der Prüfung einer möglichen definierten positiven Mindestbeschleunigung (aₘᵢₙ) im höheren Gang (Entscheidung 4') zu dienen.

## Claims

1. Method for control of the change-up operation of a motor vehicle automatic transmission with electronic transmission control device which controls changing up or changing back as a function of throttle valve opening angle and vehicle speed as well as by means of stored change-up characteristic curves or change-back characteristic curves, wherein after a change-up characteristic curve is exceeded by the current operating point, it is examined by the transmission control device before triggering a change-up operation whether, according to the instantaneous road resistance calculated from current values of throttle valve opening angle (α_{DK}), engine speed (nₘₒₜ), engine torque (M_{d mot}), vehicle speed (V_{Fzg}), transmission ratio (I_{Getr}) and transducer gain (W_{Verst}) (activity 2, 2'), a given minimum acceleration (aₘᵢₙ) in a higher gear is possible without falling below the change-back characteristic curve (decision 4, 4'), in case of a negative result of examination the change-up operation is suppressed and in case of a positive result of examination the change-up operation is performed (activity 5, 5'), characterised in that the given minimum acceleration (aₘᵢₙ) is stored in the control device as a variable associated with the vehicle speed (V_{Fzg}).

2. Method according to claim 1, characterised in that, for examination of the given possible minimum acceleration (aₘᵢₙ), the calculated instantaneous road resistance of the vehicle is calculated from the current values of throttle valve opening angle (α_{DK}), engine speed (nₘₒₜ), engine torque (M_{d mot}), vehicle speed (V_{Fzg}) , transmission ratio (I_{Getr}) and transducer gain (W_{Verst}) (activity 2, 2') and compared with the propulsive power possible in the next gear up (decision 4, 4').

3. Method according to claim 1 or 2, characterised in that calculation of the instantaneous road resistance (activity 2) in the transmission control device takes place constantly and, where a change-up requirement exists (activity 3), for examination of the possible given positive minimum acceleration (aₘᵢₙ) in the next gear up, is compared with the propulsive power possible there (decision 4).

4. Method according to claim 1 or 2, characterised in that calculation of the instantaneous road resistance (activity 2') in the transmission control device is in each case triggered, where a change-up requirement exists (activity 3'), by the latter in order then to serve as the basis of examination of a possible given positive minimum acceleration (aₘᵢₙ) in the higher gear (decision 4').

## Revendications

1. Procédé de commande du changement de vitesse en haut dans une boîte de transmission automatique comportant un appareil de commande de boîte qui, en fonction de l'angle d'ouverture de papillon et de la vitesse du véhicule et à l'aide de courbes caractéristiques mémorisées de changement de vitesse en haut et de changement de vitesse en bas, commande un changement de vitesse en haut ou un changement de vitesse en bas, dans lequel, après dépassement d'une courbe caractéristique par le point fonctionnement actuel, l'appareil de commande de boîte de transmission examine avant de déclencher un changement de vitesse en haut, si d'après la résistance à l'avancement momentanée (activité 2, 2') calculée à partir de valeurs actuelles pour l'angle d'ouverture de papillon (α_{DK}), le régime moteur (nₘₒₜ), le couple moteur (M_{dmot}), la vitesse du véhicule (V_{Fzg}), le rapport de transmission de la boîte (I_{Getr}) et le taux d'amplification du convertisseur (W_{Verst}), une accélération minimale (aₘᵢₙ) définie est possible dans le rapport supérieur sans que la courbe caractéristique de changement de vitesse en bas soit dépassée vers le bas (décision 4, 4'), en présence d'un résultat négatif inhibe le changement de vitesse en haut et en présence d'un résultat positif exécute le changement de vitesse en haut (activité 5, 5'), caractérisé par le fait que l'accélération minimale (aₘᵢₙ) définie est mémorisée dans l'appareil de commande en tant que grandeur associée à la vitesse du véhicule (V_{Fzg}).

2. Procédé selon la revendication 1, caractérisé par le fait que pour examiner la vitesse minimale (aₘᵢₙ) définie possible on calcule la résistance à l'avancement momentanée du véhicule à partir des valeurs actuelles pour l'angle d'ouverture de papillon (α_{DK}), le régime moteur (nₘₒₜ), le couple moteur (M_{dmot}), la vitesse du véhicule (V_{Fzg}), le rapport de transmission de la boîte (I_{Getr}) et le taux d'amplification du convertisseur (W_{Verst}) (activité 2, 2') et on la compare à la force de propulsion possible dans le rapport immédiatement supérieur (décision 4, 4').

3. Procédé selon la revendication 1 ou 2, caractérisé par le fait que le calcul de la résistance à l'avancement momentanée (activité 2') est réalisé de manière permanente dans l'appareil de commande de boîte de transmission et qu'en présence d'une demande de changement de vitesse en haut (activité 3), aux fins d'examiner l'accélération minimale (aₘᵢₙ) positive définie possible dans le rapport immédiatement supérieur, celle-ci est comparée à la force motrice possible dans ledit rapport (décision 4).

4. Procédé selon la revendication 1 ou 2, caractérisé par le fait que le calcul de la résistance à l'avancement momentanée (activité 2') est réalisé dans l'appareil de commande de boîte de transmission à chaque demande de changement de vitesse en haut (activité 3') et est déclenché par celle-ci, afin de servir de base pour une accélération minimale (aₘᵢₙ) positive définie possible dans le rapport supérieur (décision 4').
